**Europäisches Patentamt**

**European Patent Office**

**Office européen des brevets**

(19)

(11) Numéro de publication : **0 192 586 B1**

(12) **FASCICULE DE BREVET EUROPÉEN**

(45) Date de publication du fascicule du brevet :
07.09.88

(51) Int. Cl.⁴ : **B 23 G  1/20**, B 23 G  3/00

(21) Numéro de dépôt : **86420028.2**

(22) Date de dépôt : **30.01.86**

(54) Dispositif automatique de taraudage.

(30) Priorité : **12.02.85 FR 8501948**

(43) Date de publication de la demande :
**27.08.86 Bulletin 86/35**

(45) Mention de la délivrance du brevet :
**07.09.88 Bulletin 88/36**

(84) Etats contractants désignés :
**AT BE CH DE FR GB IT LI LU NL SE**

(56) Documents cités :
**DE-C-  357 354
FR-A- 1 444 213
FR-A- 2 317 992
US-A- 2 556 601
US-A- 2 715 233
US-A- 3 162 873**

(73) Titulaire : **ATELIERS DE DECOUPAGE EMBOUTIS-
SAGE ET MECANIQUE DE LA VALLEE DE L'ARVE
ADEMVA**
**F-74300 Thyez Haute Savoie (FR)**

(72) Inventeur : **Lavorel, Gérard**
**Les Fontanettes**
**Metz-Tessy F-74370 Pringy (FR)**

(74) Mandataire : **Wind, Jacques et al**
**Cabinet Germain et Maureau 20, boulevard Eugène
Deruelle Le Britannia - Tour C**
**F-69003 Lyon (FR)**

Jouve, 18, rue St-Denis, 75001 Paris, France

EP 0 192 586 B1

## Description

La présente invention concerne un dispositif automatique de taraudage sur presse à découper ou à emboutir, comportant un premier bloc, monté fixe sur le porte-outil inférieur de la presse, supportant un premier élément, vis ou écrou, monté libre en rotation uniquement, d'un système vis-écrou réversible, et au moins un porte-taraud rotatif lié cinématiquement en rotation sans glissement audit premier élément. Un second bloc, monté fixe sur le porte-outil supérieur de la presse, supporte le second élément, maintenu fixe en rotation et axialement, du système vis-écrou.

Dans un dispositif automatique de taraudage connu de ce genre, tel que celui décrit dans le document FR-A-2 495 979, chaque porte-taraud rotatif est monté coulissant dans une broche individuelle qui est montée dans le premier bloc par l'intermédiaire d'au moins un roulement à billes, et chaque broche individuelle est solidaire d'un pignon à dents assurant, par l'intermédiaire de chaînes et d'autres pignons à dents, sa liaison en rotation avec le premier élément du système vis-écrou. Un tel dispositif est relativement complexe et encombrant car les diamètres extérieurs des roulements à billes et des pignons pour chaînes, qui ne peuvent être très réduits, empêchent de rapprocher suffisamment des broches voisines et de tarauder simultanément des trous peu espacés l'un de l'autre, de moins de 40 mm environ, l'encombrement d'un tel premier bloc, dans le sens de déplacement de la bande, étant généralement supérieur à un pas d'avance, ce qui nécessite la présence de plusieurs postes de taraudage donc une augmentation importante de l'encombrement de l'ensemble de l'outil de presse. De plus, indépendamment de l'inconvénient résultant de son encombrement, un tel dispositif comporte des constituants qui ont chacun une masse importante (pignons à dents, chaînes, roulements à billes), ce qui empêche de faire fonctionner la presse à une cadence élevée car l'inertie importante de ces constituants empêche d'inverser leur sens de rotation à une cadence élevée, de deux ou trois fois par seconde, par exemple.

En outre, l'engagement du taraud dans le trou à tarauder est assuré par un ressort de puissance relativement faible qui pousse constamment ce porte-taraud dans le trou à tarauder, le porte-taraud recule tout d'abord par rapport à sa broche en comprimant le ressort, l'avance du taraud n'étant plus assurée, à partir de cet instant, que par le filetage du taraud lui-même, dans le trou qu'il est en train de tarauder. Un tel engagement du taraud n'est pas assuré positivement, ce qui rend difficile l'exécution, à cadence élevée, du taraudage de trous de diamètres relativement faibles (1,6 ou 2 mm par exemple), et rend impossible la réalisation de longueurs précises de taraudage, notamment pour tarauder à fond un trou borgne, d'autant plus que l'entrée du taraud doit obligatoirement être affûtée conique pour faciliter l'engagement dudit taraud dans le trou à tarauder.

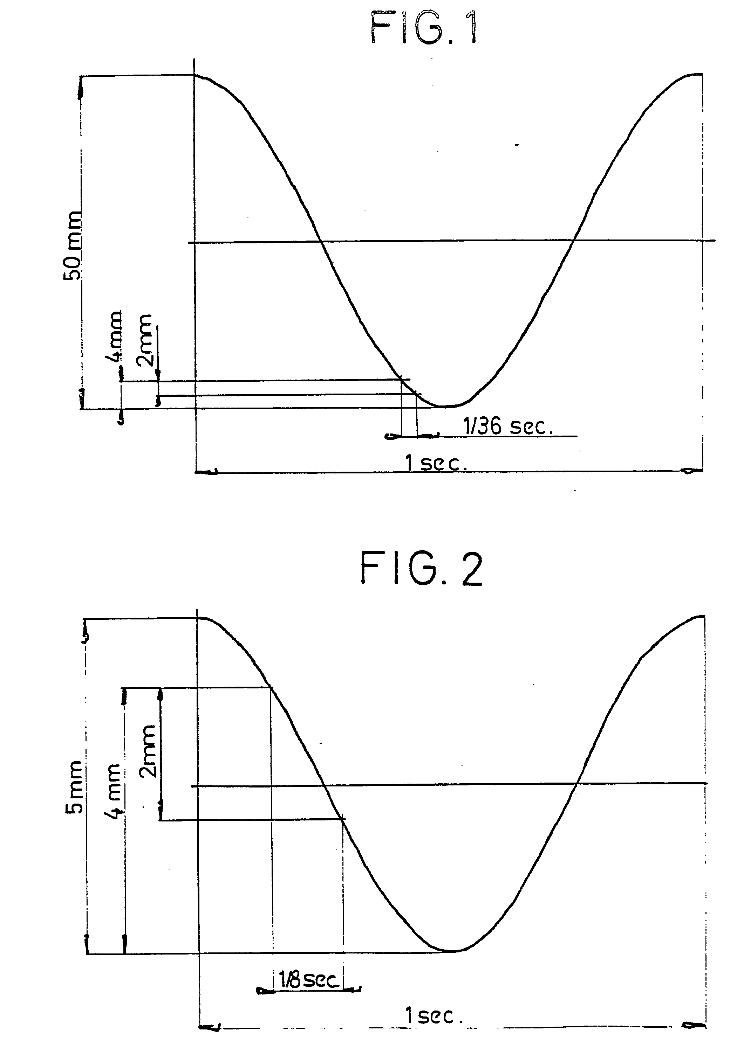

De plus, lors du taraudage, la course du porte-taraud est égale à la course de descente du coulisseau de la presse, même si la longueur du trou à tarauder est relativement réduite, l'opération de taraudage étant effectuée presque en fin de course du coulisseau. Un tel dispositif de taraudage présente certains inconvénients de fonctionnement, qui peuvent être plus facilement mis en évidence par un exemple. Considérons par exemple le cas d'un trou prévu dans une tôle de 2 mm d'épaisseur, destiné à être taraudé par un taraud de $3\times0,5$ prévu pour travailler par déformation, ce taraudage étant effectué sur une presse dont la course de descente du coulisseau est de 50 mm, fonctionnant à soixante coups/mn. La vitesse du coulisseau n'est pas constante. La courbe sinusoïdale suivie par cette vitesse, pendant le déplacement du coulisseau, est représentée sur la figure 1. Le début du taraudage est prévu à 4 mm du point mort bas du coulisseau. La course du taraud est de 50 mm, comme celle du coulisseau. Si l'on considère que, pour un taraudage par déformation, la vitesse de coupe maximum est d'environ 45 m/mn, soit 45 000 mm/mn, la vitesse de rotation du taraud doit être de $45\,000/(3\times3,14) = 4\,780$ t/mn pour respecter cette vitesse de coupe. Or on voit, sur le graphique de la figure 1, dans le cas où la presse fonctionne à 60 coups/mn, que les quatre tours de taraud nécessaires pour tarauder à un pas de 0,5 mm le trou de longueur 2 mm, sont réalisés, à partir de 4 mm du point mort bas du coulisseau, en 1/36 s environ, le taraud tournant donc à cet instant à $(4\times36\times60) = 8\,640$ t/mn, ce qui est bien supérieur à la vitesse de coupe admissible de 4 780 t/mn. Pour respecter cette vitesse de coupe, il faut que la presse fonctionne à une cadence plus lente de $(4\,780/8\,640\times60) = 33$ coups/mn

Il s'avère ainsi nécessaire de ralentir la cadence de découpage ou d'emboutissage de la presse, pour que le taraudage puisse être effectué simultanément à la même cadence, ce qui supprime une partie de l'intérêt économique qui existe à effectuer le taraudage sur la même machine que le découpage et l'emboutissage. Enfin, un tel dispositif de l'art antérieur permet d'effectuer des taraudages, uniquement suivant une direction parallèle au sens de déplacement du coulisseau de la presse.

Le dispositif automatique de taraudage, objet de l'invention, est caractérisé en ce que le ou les porte-taraud sont montés rotatifs, parallèlement l'un à l'autre, dans un support unique déplaçable parallèlement aux axes des porte-taraud, mais fixe en rotation, support par rapport auquel ils sont maintenus fixes axialement et en ce qu'il est équipé de moyens cinématiques permettant d'entraîner simultanément un déplacement axial dudit support unique et une rotation de chaque porte-taraud de telle façon que, pendant chaque descente totale du coulisseau de la presse, le support soit déplacé axialement d'une distance plus réduite correspondant uniquement à la longueur nécessaire pour effectuer le taraudage, et de telle façon que chaque porte-taraud effectue un tour pendant qu'il est déplacé axialement de la valeur d'un pas.

Selon une réalisation particulièrement avantageuse, bien que non obligatoire, chaque porte-taraud est maintenu fixe axialement par rapport au support unique, par au moins un moyen élastique maintenant constamment vers l'avant une partie du porte-taraud, en appui contre une partie du support, ce moyen élastique ayant une force suffisante pour s'opposer à tout recul du porte-taraud par rapport à son point d'appui, pendant le taraudage du trou correspondant.

La présente invention se propose de permettre la réalisation d'un dispositif automatique de taraudage susceptible de fonctionner à une cadence relativement élevée, sans ralentir la cadence de fonctionnement de la presse, tout en permettant le taraudage de trous de diamètre relativement petit (1,6 mm), en limitant les risques de casse du taraud car en respectant des vitesses de coupe normales, plusieurs trous étant susceptibles d'être taraudés simultanément, même s'ils sont relativement rapprochés l'un de l'autre (10 mm par exemple), l'entraînement de chaque taraud étant assuré positivement pendant son avance, de façon à ce que le trou soit obligatoirement taraudé, sur une longueur précise, notamment lorsqu'il s'agit d'un trou borgne, sans qu'il soit nécessaire d'affûter l'entrée de chaque taraud pour faciliter son engagement dans le trou correspondant. En outre, le présent dispositif permet d'effectuer un taraudage suivant une direction quelconque autre que celle du déplacement du coulisseau de la presse.

Enfin la structure du dispositif est telle que les éléments constituants peuvent avoir une masse suffisamment faible pour que ledit dispositif puisse fonctionner à cadence élevée, sans que l'inertie des éléments constituants soit gênante. De plus, la structure compacte du premier bloc du dispositif de taraudage et sa disposition sur le porte-outil inférieur de la presse, favorisent un échange facile et rapide dudit dispositif.

Une réalisation du dispositif automatique de taraudage, suivant l'invention, présente l'avantage supplémentaire d'empêcher la casse des tarauds dans le cas où les trous à tarauder n'auraient pas accidentellement été réalisés auparavant.

Les dessins annexés illustrent, à titre d'exemples, quelques modes de réalisation conformes à la présente invention.

La figure 1 représente la courbe suivie par la vitesse de rotation des porte-taraud, à chaque instant de la course de descente du coulisseau, dans l'art antérieur cité.

La figure 2 représente la courbe suivie par la vitesse de rotation des porte-taraud, à chaque instant de la descente desdits porte-taraud pendant la descente simultanée du coulisseau, dans un exemple de réalisation de la présente invention.

La figure 3 représente, vu en coupe suivant III-III de la figure 4, le premier mode de réalisation de l'invention.

La figure 4 représente partiellement, vu en coupe suivant IV-IV de la figure 3, le même mode de réalisation.

La figure 5 représente, vu suivant une coupe similaire à celle de la figure 3, un second mode de réalisation de l'invention.

La figure 6 représente partiellement, vu de dessus, en coupe, un troisième mode de réalisation de l'invention.

La figure 7 représente, vu suivant une coupe similaire à celle de la figure 3, mais partielle, une variante de réalisation du dispositif de la figure 3, constituant un quatrième mode de réalisation de l'invention.

La figure 8 représente, vu suivant une coupe similaire à celle de la figure 3, un cinquième mode de réalisation de l'invention.

La figure 9 représente partiellement, vu suivant la même coupe, le même mode de réalisation avec les tarauds en fin de course de taraudage.

La figure 10 représente, vu suivant une coupe similaire à celle de la figure 3, un sixième mode de réalisation de l'invention.

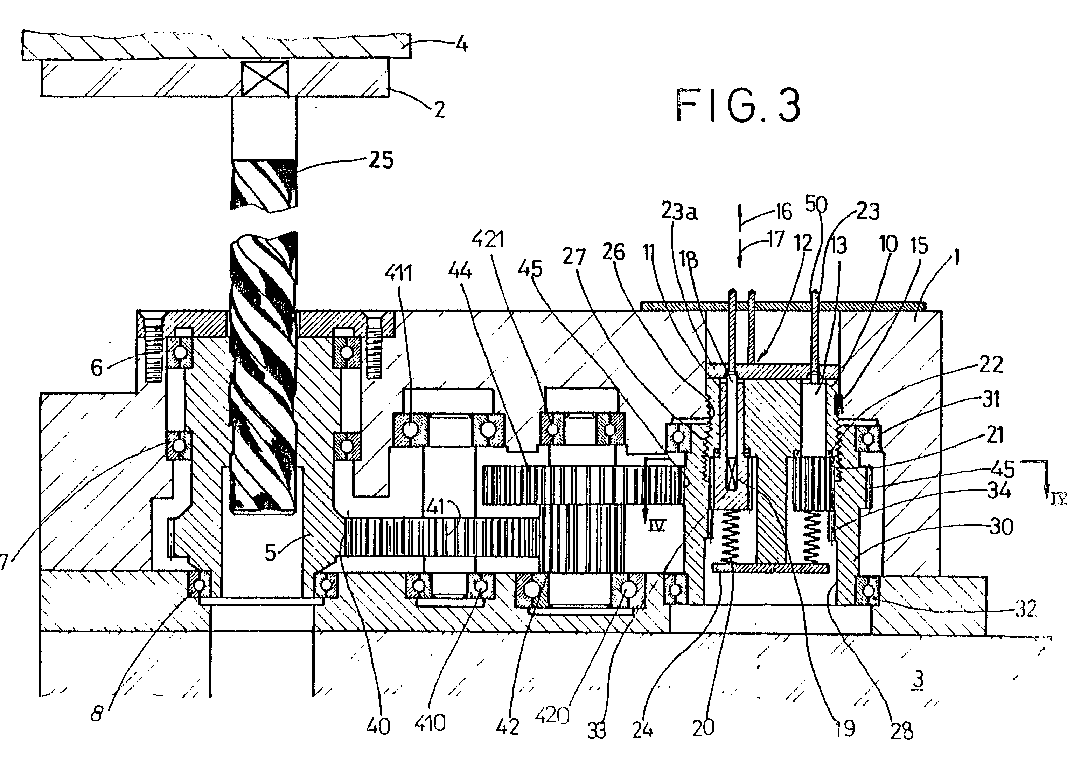

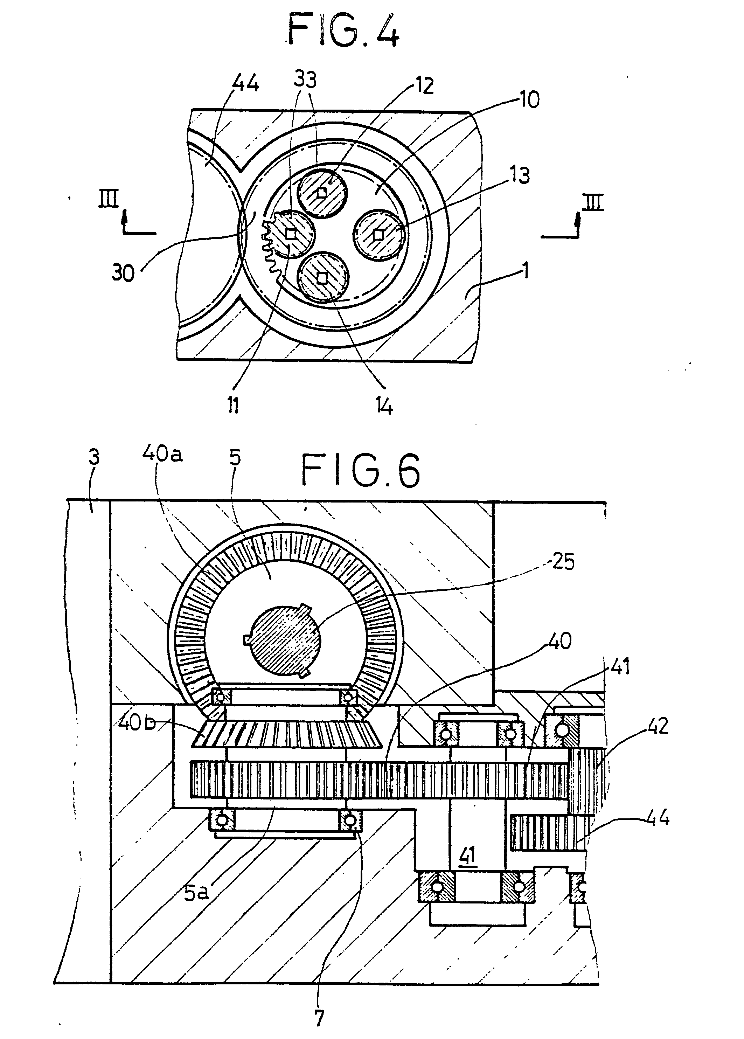

Tel qu'il est représenté sur les figures 3 et 4, le dispositif automatique de taraudage comporte un premier bloc 1 monté fixe sur le porte-outil inférieur 3 de la presse, et un second bloc 2 monté fixe sur le porte-outil supérieur 4 de ladite presse.

Le premier bloc 1 supporte un premier élément d'un système vis-écrou réversible, constitué, dans cet exemple, par un écrou 5 monté libre en rotation, mais non axialement, sur ledit premier bloc 1 par l'intermédiaire de roulements à billes 6, 7, 8 par exemple.

Le second bloc 2 supporte le second élément du système vis-écrou réversible, élément constitué par une vis 25 constamment en prise avec l'écrou 5, maintenue fixe en rotation et axialement, par rapport à ce second bloc 2.

Le premier bloc 1 supporte également un certain nombre de porte-taraud, quatre dans cet exemple, 11, 12, 13, 14 (figure 4), liés cinématiquement en rotation sans glissement à l'écrou 5. Ces porte-taraud 11 à 14 sont montés rotatifs parallèlement l'un à l'autre, par l'intermédiaire de roulements à billes 22, dans un support unique 10 déplaçable suivant 16-17 parallèlement aux axes desdits porte-taraud, mais fixe en rotation sous l'effet, par exemple, d'une clavette 15 le liant au corps du premier bloc 1. Chaque taraud 11 à 14 est maintenu fixe axialement par rapport au support unique commun 10. Dans cet exemple, c'est un ressort de compression 20 qui maintient constamment vers l'avant suivant 16, une partie 21 de chaque porte-taraud, en appui contre une partie du support 10 constituée par exemple par le roulement à billes 22 correspondant dont la bague extérieure est logée dans ce support 10.

Chaque ressort de compression 20 est maintenu comprimé entre l'extrémité du porte-taraud correspondant, opposée au taraud 23, et une partie d'une équerre 24 solidaire du support 10. Chaque ressort 20 a une force suffisante pour s'opposer à tout recul suivant 17 du porte-taraud correspondant, par rapport à son point d'appui, pendant le taraudage du trou correspondant. Chaque ressort 20 est prévu pour se comprimer en permettant le recul du porte-taraud, uniquement si, accidentellement, le trou à tarauder n'existe pas. Chaque porte-taraud comporte axialement un logement cylindrique 18 borgne, de diamètre juste suffisant pour recevoir la queue d'un taraud se terminant par un carré en creux 19 prévu pour recevoir le carré en relief du taraud, pour empêcher la rotation dudit taraud. Une plaque de fermeture 23a, placée sur la face avant du support 10, maintient axialement tous les tarauds dans leurs logements 18 respectifs. Dans cet exemple, les logements cylindriques 18 débouchent vers le haut et les parties filetées actives des tarauds sont donc dirigées vers le haut. La bande 60 comportant les trous à tarauder défile au-dessus des parties filetées des tarauds.

Le pourtour extérieur du support unique 10 comporte un filetage 26 qui est constamment en prise avec un taraudage 27 prévu sur le pourtour intérieur 28 d'une broche creuse unique 30 entourant le support 10. Cette broche creuse 30 est montée rotative dans le corps du premier bloc 1 par l'intermédiaire de deux roulements à billes 31, 32 par exemple. Chaque porte-taraud 11 à 14 est solidaire d'un pignon denté 33 concentrique à son axe de rotation. Chaque pignon denté 33 est constamment en prise avec une couronne dentée 34 prévue sur le pourtour intérieur 28 de la broche creuse 30 qui est elle-même liée cinématiquement en rotation avec l'écrou 5 du système vis-écrou par un mécanisme de transmission. Ce mécanisme comprend par exemple un pignon denté 40 solidaire de l'écrou 5, en prise avec une roue dentée 41, avec roulements à billes 410 et 411, elle-même en prise avec un pignon denté 42 d'un mobile comprenant une roue dentée 44 et les roulements à billes 420 et 421. Cette roue dentée 44 est en prise avec une couronne dentée 45 prévue sur le pourtour extérieur de la broche creuse 30.

Le rapport de vitesse fourni par ce mécanisme de transmission, et le pas du filetage intérieur 27 de la broche creuse 30 sont déterminés de telle façon que, pendant chaque descente du coulisseau non représenté sur le dessin, le support 10 soit déplacé axialement d'une distance plus réduite correspondant uniquement à la longueur nécessaire pour effectuer le taraudage. Dans notre exemple, le trou à tarauder 50 ayant une longueur de 2 mm environ, la distance nécessaire pour effectuer le taraudage peut être égale environ à 5 mm : 1 mm avant le taraudage, 2 mm de taraudage, 2 mm après taraudage.

D'autre part, les nombres de dents respectifs du pignon denté de chaque porte-taraud 11 à 14 et de la couronne dentée 34, et le pas du filetage intérieur 27 de la broche creuse 30 sont déterminés de telle façon que chaque porte-taraud 11 à 14 effectue un tour pendant qu'il est déplacé axialement de la valeur d'un pas.

Chaque fois que le coulisseau de la presse effectue sa course de descente, il entraîne vers le bas suivant 17 la vis 25 qui provoque la rotation de l'écrou 5 qui entraîne lui-même en rotation, par l'intermédiaire du mécanisme de transmission 40-44, la broche creuse 30. Dans le même temps celle-ci provoque, par son filetage intérieur 27, le déplacement axial suivant 16 du support unique 10 et des porte-taraud 11-14, et par sa denture intérieure 34, la rotation desdits porte-taraud 11-14. Dès que le coulisseau effectue la course de montée suivante, le fonctionnement de tous les éléments ci-dessus s'effectue en sens inverse.

Reprenons, à titre d'exemple, le cas du taraudage décrit dans l'introduction : taraudage au diamètre 3×0,5 avec un taraud travaillant par déformation. Pendant que le coulisseau effectue, avec la vis 25, sa course de descente de 50 mm, le support 10 et ses porte-taraud se déplaçant axialement de 5 mm seulement, les porte-taraud effectuent seulement dix tours dont quatre tours réellement utilisés pour tarauder une longueur de 2 mm avec un pas de 0,5 mm. Le graphique de la figure 2 représente la courbe sinusoïdale représentant la vitesse des porte-taraud à chaque instant de la course de 5 mm de long, des tarauds, le début du taraudage de 2 mm ayant lieu à 4 mm du point mort bas du coulisseau. On voit sur ce graphique de la figure 2 correspondant à un cas où la presse fonctionne à 60 coups/mn, que les quatre tours utiles des tarauds sont réalisés en 1/8 s environ, soit à 4×8×60 = 1 920 t/mn. En respectant la vitesse de coupe des tarauds (45 m/mn), il a été déterminé précédemment que la vitesse de rotation admissible des porte-taraud était de 4 780 t/mn. ce qui correspond à une cadence de fonctionnement de la presse, égal à 4 780/1 920×60 = 149 coups/mn.

On constate qu'une telle cadence est de 4,5 fois plus élevée que celle admissible dans le cas de l'art antérieur cité.

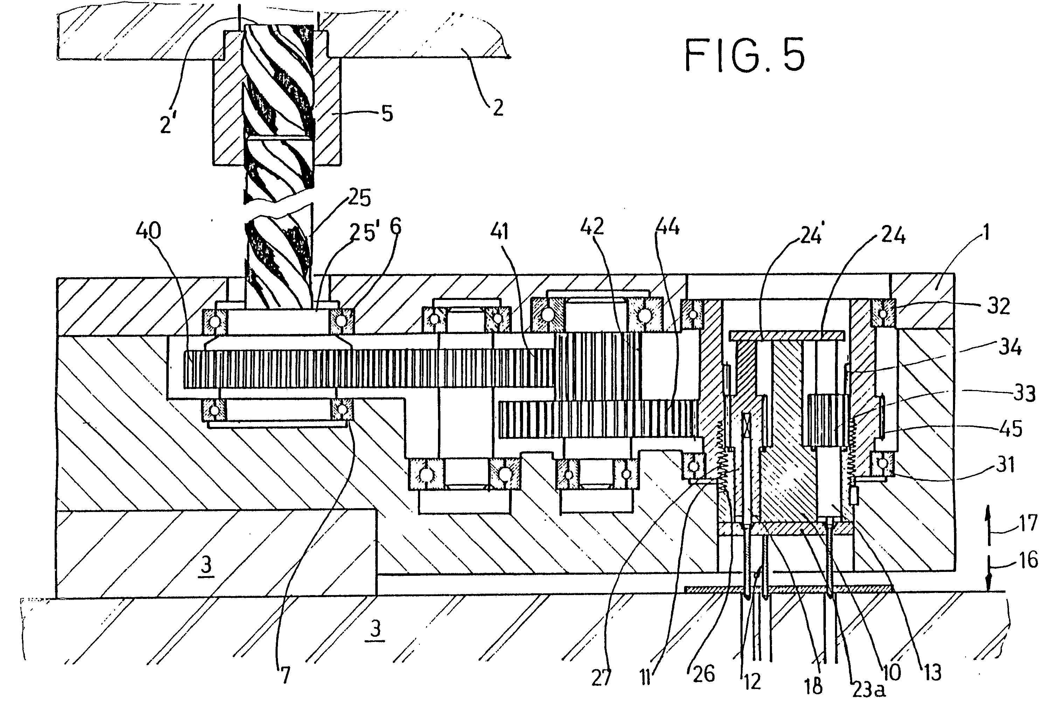

Dans le second mode de réalisation de l'invention représenté sur la figure 5, c'est la vis 25 et son prolongement cylindrique 25' qui sont montés libres en rotation, mais non axialement, sur le premier bloc 1 par l'intermédiaire de roulements à billes 6 et 7. Le pignon denté 40 est solidaire du prolongement cylindrique 25'. C'est l'écrou 5 qui est maintenu fixe en rotation et axialement, par rapport au second bloc 2. Un dégagement 2' dans ce second bloc 2 permet le passage de la vis 25, lors de la descente de ce second bloc 2.

D'autre part, l'ensemble du premier bloc 1 est retourné de 180°, par rapport au cas de la figure 3, la partie active des tarauds étant dirigée vers le bas, la bande comportant les trous à tarauder, défilant au-dessous du premier bloc 1 et des parties actives des tarauds. De plus, chaque porte taraud 11-14 est maintenu constamment vers l'avant suivant 16, non par un ressort de compression 20, mais par un prolongement rigide 24' de chaque porte-taraud 11-14 dont l'extrémité libre est constamment en appui contre une équerre 24.

Tous les autres éléments constitutifs sont identiques à ceux du premier mode de réalisation (figure 3 et 4), et le fonctionnement de l'ensemble reste inchangé, la rotation du premier pignon denté 40 étant provoquée par la descente, puis la remontée, de l'écrou 5 solidaire du second bloc 2.

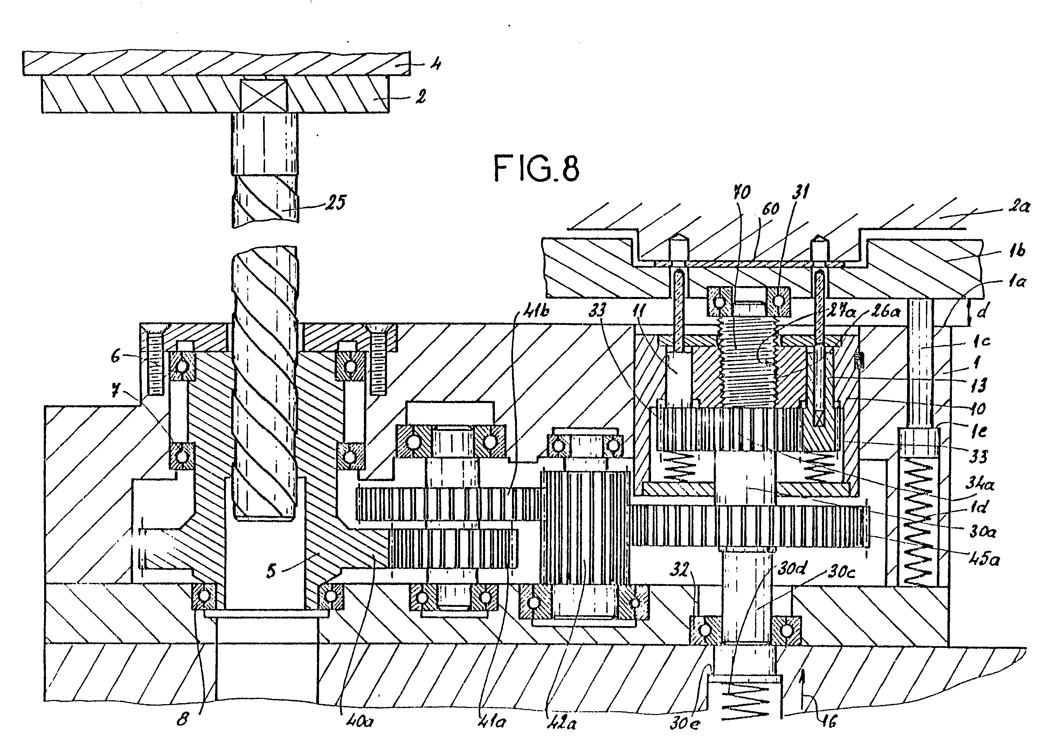

Tel qu'il est représenté sur la figure 6, en vue de dessus, le troisième mode de réalisation comporte, comme le premier mode de réalisation (figure 3), une vis sans fin 25 constamment en prise avec un écrou 5. Cependant, dans le troisième mode de réalisation, cet écrou 5 n'est pas solidaire lui-même du pignon denté 40, mais d'une couronne dentée conique 40a en prise avec un pignon denté conique 40b solidaire d'un support rotatif 5a. C'est de ce support rotatif 5a qu'est solidaire la roue dentée 40 qui est en prise elle-même avec le pignon denté 42, etc. Tous les autres éléments constitutifs sont identiques à ceux du premier mode de réalisation (figure 3 et 4). Dans ce troisième mode de réalisation, les porte-taraud 11 à 14 sont orientés perpendiculairement à la vis 25 et au sens de déplacement du coulisseau. Un tel dispositif permet donc de tarauder suivant une direction perpendiculaire à ce sens de déplacement du coulisseau. Pour le reste, le fonctionnement du dispositif est identique à celui du premier mode de réalisation décrit précédemment (figures 2 à 4).

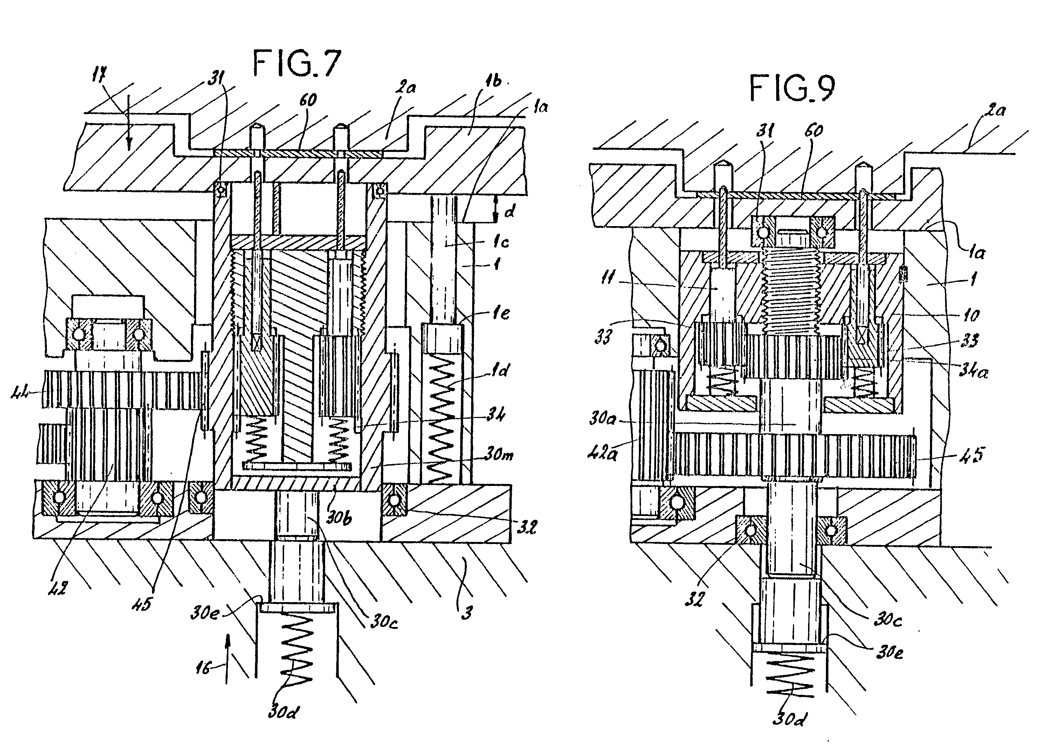

La figure 7 représente, en coupe partielle, une variante du dispositif de la figure 3. Selon cette variante, la broche creuse 30 du dispositif de la figure 3 est remplacée par une broche creuse 30m comportant un fond 30b supportant un prolongement 30c, l'ensemble tendant constamment à se déplacer axialement suivant la direction 16 sous l'action répulsive d'un ressort 30d.

Le déplacement de la broche creuse 30m suivant la direction axiale 16 est limité par un épaulement 30e du corps 30c, formant butée dans le porte-outil inférieur 3, comme représenté, jusqu'à une position d'avancement maximal représentée sur la figure 7, une distance axiale d séparant alors le dessus 1a du premier bloc 1 et l'extrémité supérieure de la broche creuse 30m. Il est par ailleurs prévu une plaque supplémentaire 1b destinée au supportage de la bande 60 à tarauder, cette plaque 1b étant portée de manière coulissante dans le sens vertical par plusieurs pieds 1c coulissant dans le bloc 1 et dont le déplacement suivant la direction axiale 16 est limité par un épaulement 1e, chaque pied 1c tendant à se déplacer axialement suivant la direction 16 sous l'action répulsive d'un ressort 1d. Tous les autres éléments constitutifs sont identiques à ceux du dispositif de la figure 3 et ne sont donc pas tous représentés sur ce dessin.

L'existence d'un tel espacement d est rendue nécessaire dans certains cas, par exemple lorsque l'on doit tarauder des pièces qui sont ensuite, sur le même outil, pliées, embouties, ou autre, par exemple lors de l'opération qui suit le taraudage.

La bande doit en effet dans de tels cas être reculée d'une distance d correspondant à la dimension de la partie pliée, emboutie ou autre.

Avec le dispositif représenté sur la figure 7, le déplacement axial suivant 16 des portes-tarauds 11-14 commence dès qu'un presse-flan 2a supporté par le second bloc 2 vient en contact avec la bande 60 dans laquelle doit être effectué le taraudage, et il se poursuit après que la broche creuse 30m, repoussée par la bande 60, ait occupé sa position basse. Le détaraudage s'effectue de façon similaire jusqu'à ce que la bande 60 et le presse-flan 2a occupent à nouveau leur position haute de la figure 7.

Une telle variante de réalisation permet de commencer le taraudage d'une bande, déjà pendant son déplacement vertical précédant son immobilisation contre la face supérieure 1a du premier bloc 1, ce taraudage se poursuivant et se terminant ensuite comme décrit précédemment en référence à la figure 3. Il est ainsi possible d'utiliser pour le taraudage toute la partie utilisable de la course du coulisseau, partie correspondant à la période pendant laquelle la bande n'est pas déplacée longitudinalement d'un poste de travail au poste suivant.

La figure 8 représente une autre forme de réalisation de l'invention, dans laquelle la broche creuse rotative 30 et 30m, des figures 3 et 7 respectivement, est supprimée et remplacée par un élément rotatif plein et axial 30a, disposé parallèlement aux porte-tarauds 11-14. Cet élément rotatif 30a comporte, sur son pourtour extérieur et à sa partie supérieure, un filetage 27a qui est constamment en prise avec un taraudage 26a prévu sur le pourtour intérieur d'un logement cylindrique creux 70 percé dans le support unique 10. D'autre part, l'élément rotatif plein 30a comporte également sur son pourtour extérieur une denture 34a qui est constamment en prise avec les pignons dentés 33 respectifs des porte-tarauds 11 à 14. Une autre denture 45a de l'élément rotatif 30a est liée cinématiquement en rotation avec le premier élément 5 du système vis-écrou réversible, par un mécanisme de transmission constitué des roues et pignons dentés 40a, 41a, 41b et 42a.

Tous les autres éléments constitutifs sont identiques à ceux représentés sur la figure 3. De manière optionnelle par ailleurs, le dispositif de la figure 8 peut être équipé des mêmes moyens 30c, 30d, 30e, 1b à 1e, représentés au dessin, que ceux décrits avec les mêmes chiffres de référence sur la figure 7, permettant d'assurer une distance de garde d comme décrit précédemment. Dans ce cas, c'est la partie inférieure de l'élément rotatif 30a qui peut comporter un prolongement 30c coopérant avec le ressort de répulsion 30d, ou autre dispositif élastique équivalent. Le fonctionnement de l'ensemble est similaire à celui des figures 3 ou 7, selon le cas. La figure 8 représente le dispositif avant le début de l'opération de taraudage, tandis que la figure 9 le représente en fin de taraudage. Dans le cas représenté d'utilisation d'un prolongement 30 avec butée 30e, permettant de déterminer la distance d comme expliqué précédemment, le taraudage peut commencer dès que le presse-flan 2a vient en appui sur la bande 60 (figure 8), bien que la bande soit en train de se déplacer verticalement du haut vers le bas. Le taraudage se termine lorsque le support unique 10 occupe sa position haute de la figure 9.

Dans le mode de réalisation selon la figure 8, l'encombrement de l'ensemble se trouve réduit par rapport aux réalisations des figures 3 et 7, compte-tenu de la suppression de la broche creuse (30 et 30m respectivement). Par ailleurs, l'usinage de l'élément rotatif 30a est plus facile que celui de la couronne dentée intérieure 34 des dispositifs selon les figures 3 et 7. Enfin, le guidage de cet élément denté rotatif 30a est meilleur que le guidage d'un élément de plus grand diamètre tel que la broche creuse 30 (figure 3) ou la broche creuse 30m (figure 7).

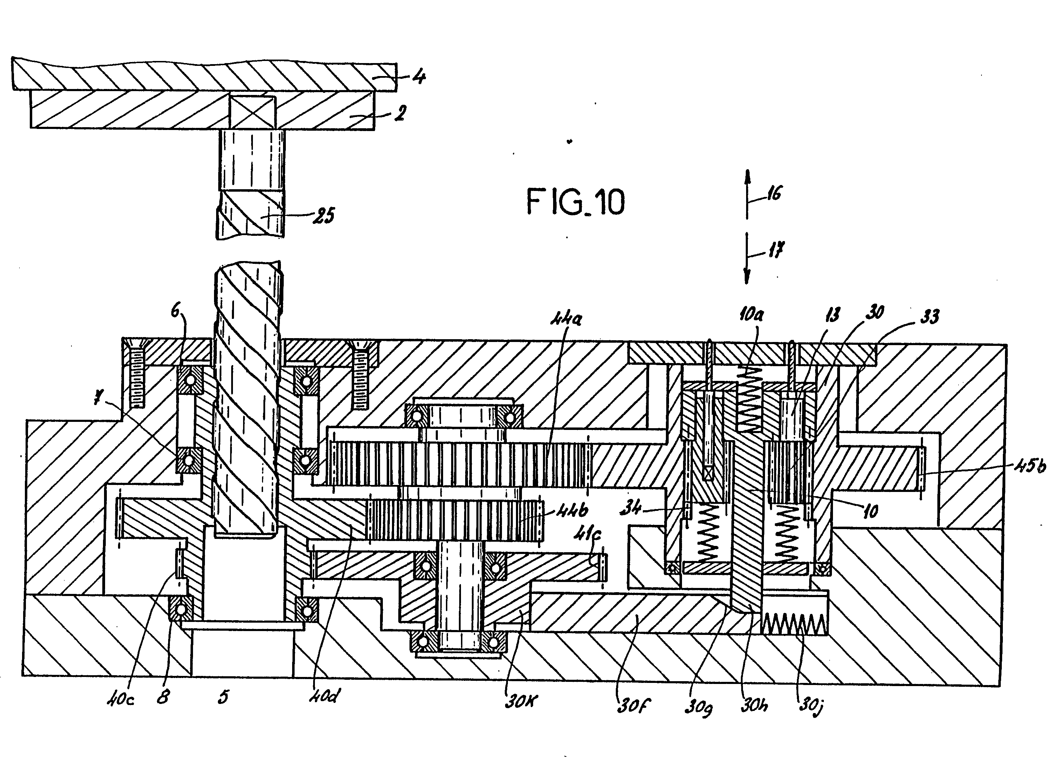

La figure 10 représente enfin un dernier mode de réalisation de l'invention qui, tel qu'il est représenté, peut être considéré comme une variante du dispositif de la figure 3, mais qui peut tout aussi bien être appliqué à la constitution d'une variante du dispositif de la figure 8, sans son système optionnel à prolongement 30c, butée 30e, ressort 30d, et éléments 1b à 1d associés.

Tel que représenté sur la figure 10, le support unique 10 ne comporte plus de filetage (26, figure 3) sur son pourtour extérieur, et le filetage correspondant (27, figure 3 ou 27a, figure 7, en cas d'application à ce dernier dispositif) de la broche creuse 30 (de l'élément rotatif 30a en cas d'application au dispositif de la figure 7) est également supprimé. Le support 10 devient donc déplaçable axialement par coulissement et ce déplacement axial, selon 16 ou 17, est obtenu par un élément de commande distinct de la broche creuse 30 (respectivement de l'élément rotatif 30a).

Cet élément de commande est constitué, dans l'exemple non limitatif représenté sur la figure 10, par un poussoir 30f comportant une rampe 30g prévue pour coopérer avec l'extrémité d'un prolongement 30h prévu à la partie inférieure du support unique 10. Un moyen élastique, tel qu'un ressort de répulsion 30j, tend constamment à maintenir le poussoir 30f en appui contre une came 30k, faisant partie d'un mécanisme de transmission comprenant également une roue dentée 41c en prise avec un pignon denté 40c solidaire du premier élément 5 du système vis-écrou réversible. La came 30k et la roue centée 41c sont coaxiales et solidaires l'une de l'autre. Ce mécanisme de transmission assure ainsi, de manière adéquate pour la réalisation des fonctions précédemment définies de l'invention, la liaison cinématique entre l'élément de commande (poussoir 30f) et le premier élément 5. Un ressort 10a tend constamment à repousser le support unique 10 suivant 17 en direction de la rampe 30g contre laquelle l'extrémité du prolongement 30h de ce support 10 est constamment en appui. Lorsque la came 30k permet le recul du poussoir 30f, sous l'action du ressort 30j, le support unique 10 occupe sa position basse représentée sur la figure 10.

D'autre part, la liaison cinématique entre une roue dentée 45b solidaire de la broche creuse 30 (ou respectivement de l'élément rotatif 30a), et le premier élément 5, est assurée par un mécanisme de transmission analogue à ceux décrits précédemment, et comprenant une roue dentée 44a solidaire d'un pignon denté 44b, qui est lui-même en prise avec une roue dentée 40d supportée par le premier élément 5 dont elle est solidaire. Les fonctions réalisées sont les mêmes que celles prédéfinies en relation, par exemple, avec la figure 3. En variante, la rampe 30g pourrait être remplacée par un moyen de déplacement mécanique quelconque agissant positivement sur l'extrémité de la tige 30h du support unique 10, à une vitesse prédéterminée correspondant, comme dans tous les cas précédents, au pas à obtenir. Ce moyen de déplacement mécanique pourrait même être actionné, non pas par le premier élément 5, mais par un élément lié directement au coulisseau 4 de la presse.

Par rapport aux réalisations précédentes, ce dernier mode de réalisation présente, tout en remplissant les mêmes fonctions, les avantages suivants :

— pas d'usure des filetages (respectivement 26,27 et 26a, 27a), ceux-ci ayant été supprimés et remplacés par exemple par une rampe 30g qui résiste mieux à l'usure,

— course plus réduite des porte-tarauds 11-14 dont le déplacement à vide, avant taraudage, peut être supprimé car le déplacement axial du support unique 10 n'est pas lié directement au mouvement de rotation des tarauds, qui est permanent,

— usure moindre de l'ensemble mécanique, les déplacements de certains étant réduits.

Sans sortir du cadre de la présente invention, les porte-tarauds 11 à 14 et leur support commun pourraient, dans les réalisations selon les figures 7, 8, 9 et 10, être orientés en sens inverse comme représenté sur la figure 5.

Avec les modes de réalisation de l'invention décrits ci-dessus, il est également possible de tarauder simultanément plusieurs trous, deux par exemple, de diamètres différents, à des pas différents. Ainsi, il est possible par exemple de tarauder un trou au diamètre de 3×0,50 et simultanément un autre trou au diamètre de 4×0,75. Pour cela il suffit que les pignons dentés 33 solidaires respectivement des porte-tarauds 11 à 14 soient choisis avec un nombre de dents approprié choisi dans le même rapport que celui des pas 0,75/0,5=1,5.

Il faut par exemple, si le pignon denté 33 du porte-taraud 11 supportant le taraud de 3×0,5 comporte 10 dents, que le pignon denté 33 du porte-taraud 12 supporte le taraud de 4×0,75 comporte 10×1,5 dents. Ainsi, pendant que les deux tarauds avanceront simultanément axialement de 2 mm, le premier effectuera quatre tours au pas de 0,5 mm, pendant que le second effectuera 2,66 tours au pas de 0,75 mm.

Il faut remarquer, dans les modes de réalisation décrits ci-dessus, que les roulements à billes 22 peuvent avoir des dimensions très réduites, beaucoup plus réduites que dans le cas de l'art antérieur, donc une masse très réduite, car ils assurent uniquement la rotation d'un porte-taraud 11-14 qui peut avoir un diamètre extérieur très réduit, dans le support unique 10. L'usure de tels roulements à billes 22, dans le temps, est de ce fait très réduite, car, en fonctionnement normal, chaque porte-taraud 11-14 de masse réduite effectue, à chaque descente du coulisseau, un nombre très réduit de tours sans qu'il y ait simultanément un déplacement axial du porte-taraud dans le support unique 10. Les changements brusques du sens de rotation des porte-taraud 11-14 s'en trouvent largement facilités. Il faut noter également que l'inertie relativement importante de la broche creuse unique 30 respectivement 30m ou de l'élément rotatif plein 30a, et des roulements à billes 31, 32 n'est pas gênante puisque cette broche creuse 30, 30m ou cet élément 30a. tournent chacun à une vitesse relativement lente.

On remarquera également que le dispositif de taraudage, suivant l'invention, peut être très facilement remplacé à volonté par un autre dispositif préparé à l'avance pour effectuer un taraudage différent du précédent car il est très compact, d'encombrement réduit, et fixé à la surface du porte-outil inférieur, ce qui facilite sa manipulation.

## Revendications

1. Dispositif automatique de taraudage sur presse à découper ou à emboutir, comportant un premier bloc (1), monté fixe sur le porte-outil inférieur (3) de la presse, supportant un premier élément (5, 25), écrou ou vis, monté libre en rotation uniquement, d'un système vis-écrou réversible, et au moins un porte-taraud rotatif (11 à 14) lié cinématiquement en rotation sans glissement audit premier bloc (1), un second bloc (2), monté fixe sur le porte-outil supérieur (4) de la presse, supportant le second élément (25, 5), maintenu fixe en rotation et axialement, du système vis-écrou, caractérisé

— en ce que le ou les porte-taraud (11 à 14) sont montés rotatifs, parallèlement l'un à l'autre, dans un support unique (10) déplaçable (suivant 16, 17) parallèlement aux axes des porte-taraud, mais fixe en rotation, support par rapport auquel ils sont maintenus fixes axialement,

— et en ce qu'il est équipé de moyens cinématiques (40 à 45, 33, 34, 26, 27 ; 40a à 45a, 33, 34a, 26a, 27a ; 40d, 44b, 44a, 45b, 34, 33, et 40c, 41c, 30k, 30f, 30g, 30h) permettant d'entraîner simultanément un déplacement axial dudit support unique (10) et une rotation de chaque porte-taraud (11-14) de telle façon que, pendant chaque descente totale du coulisseau de la presse, le support (10) soit déplacé axialement d'une distance plus réduite correspondant uniquement à la longueur nécessaire pour effectuer le taraudage, et de telle façon que chaque porte-taraud (11 à 14) effectue un tour pendant qu'il est déplacé axialement de la valeur d'un pas.

2. Dispositif automatique de taraudage, selon la revendication 1, caractérisé en ce que chaque porte-taraud (11-14) est maintenu fixe axialement par rapport au support unique (10), par au moins un moyen élastique (20) maintenant constamment vers l'avant (16) une partie (21) du porte-taraud, en appui contre une partie (22) du support (10), ce moyen élastique (20) ayant une force suffisante pour s'opposer à tout recul du porte-taraud par rapport à son point d'appui, pendant le taraudage du trou correspondant.

3. Dispositif selon la revendication 1 ou la revendication 2, caractérisé en ce que le pourtour extérieur dudit support unique (10) comporte un filetage (26) qui est constamment en prise avec un filetage (27) prévu sur le pourtour intérieur (28) d'une broche creuse rotative unique (30) entourant le support (10), chaque porte-taraud (11-14) étant solidaire d'un pignon denté (33) concentrique à son axe de rotation, pignon constamment en prise avec une couronne dentée (34) prévue sur le pourtour intérieur (28) de la broche creuse (30) qui est elle-même liée cinématiquement en rotation avec le premier élément (5) du système vis-écrou par un mécanisme de transmission (40 à 45), le rapport de vitesse fourni par le mécanisme de transmission, et le pas du filetage intérieur (27) de la broche creuse (30) étant déterminés de telle façon que, pendant chaque descente totale du coulisseau, le support (10) soit déplacé axialement d'une distance plus réduite correspondant uniquement à la longueur nécessaire pour effectuer le taraudage, les nombres de dents respectifs du pignon denté (33) de chaque porte-taraud (11-14) et de la couronne dentée (34) de la broche creuse (30), et le pas du filetage intérieur (27) de la broche creuse (30) étant déterminés de telle façon que chaque porte-taraud (11 à 14) effectue un tour pendant qu'il est déplacé axialement de la valeur d'un pas.

4. Dispositif selon la revendication 3, caractérisé en ce que la broche creuse (30m) comporte un fond (30b) supportant un prolongement (30c) repoussé constamment en direction de la pièce à tarauder par un dispositif élastique (30d), un dispositif de butée (30e), ou analogue, limitant le déplacement de la broche creuse (30m) en direction de la pièce à tarauder jusqu'à une position laissant une distance libre prédéterminée (d) entre le dessus (1a) du premier bloc (1) de la presse et l'extrémité supérieure de la broche creuse (30m).

5. Dispositif selon la revendication 1 ou la revendication 2, caractérisé

— en ce que ledit support unique (10) comporte un logement cylindrique axial (70), parallèle aux porte-tarauds (11-14) et dont le pourtour intérieur est muni d'un taraudage (27a),

— en ce que ledit taraudage (27a) est constamment en prise avec un filetage (26a) prévu sur le pourtour extérieur d'un élément rotatif (30a) coaxial audit logement cylindrique (50),

— en ce que chaque porte-taraud (11-14) est solidaire d'un pignon denté (33) concentrique à son axe de rotation et constamment en prise avec une première denture (34a) prévue sur le pourtour extérieur dudit élément rotatif (30a),

— et en ce que ledit élément rotatif (30a) est pourvu d'une deuxième denture (45a) permettant de le lier cinématiquement en rotation avec le premier élément (5) du système vis-écrou par un mécanisme de transmission (40a, 41a, 41b, 42a), le rapport de vitesse fourni par le mécanisme de transmission, et le pas de filetage extérieur (26a) de l'élément rotatif (30a) étant déterminés de telle façon que, pendant chaque descente totale du coulisseau, le support (10) soit déplacé axialement d'une distance plus réduite correspondant uniquement à la longueur nécessaire pour effectuer le taraudage, les nombres de dents respectifs du pignon denté (33) de chaque porte-taraud (11-14) et de la première denture (34a) de l'élément rotatif (30a) et le pas du filetage extérieur (26a) de l'élément rotatif (30a) étant de telle façon que chaque porte-taraud (11 à 14) effectue un tour pendant qu'il est déplacé axialement de la valeur d'un pas.

6. Dispositif selon la revendication 5, caractérisé en ce que la partie inférieure de l'élément rotatif (30a) comporte un prolongement (30c) repoussé en direction de la pièce à tarauder par un dispositif élastique (30d), un dispositif de butée (30e), ou analogue, limitant le déplacement de l'élément rotatif (30a) en direction de la pièce à tarauder jusqu'à une position laissant une distance libre prédéterminée (d) entre le dessus (1a) du premier bloc (1) de la presse et l'extrémité supérieure de l'élément rotatif (30a).

7. Dispositif selon la revendication 1 ou la revendication 2, caractérisé

— en ce que ledit support unique (10) est déplaçable axialement par coulissement et est relié à un dispositif mécanique (30g, 30f, 30j, 10a, 30k) permettant de lui imposer un déplacement axial, ledit dispositif mécanique étant commandé par des moyens (40c, 41c) liés au déplacement du coulisseau de la presse de telle façon que, pendant chaque descente totale du coulisseau, le support (10) soit déplacé axialement d'une distance plus réduite correspondant uniquement à la longueur nécessaire pour effectuer le taraudage,

— en ce que chaque porte-taraud (11-14) est solidaire d'un pignon denté (33) concentrique à son axe de rotation et permettant de le lier cinématiquement en rotation avec le premier élément (5) du système vis-écrou par un mécanisme de transmission (34, 45b, 44a, 44b, 40d), le rapport de vitesse fourni par ledit mécanisme de transmission et les nombres de dents respectifs étant déterminés, en fonction de la commande mécanique (30g, 30f, 30j, 10a, 30k, 40c, 41c) de déplacement axial du support unique (10), de telle façon que chaque porte-taraud (11 à 14) effectue un tour pendant qu'il est déplacé axialement de la valeur d'un pas.

**Claims**

1. An automatic screw-cutting device on a punching or blanking press, comprising a first block (1) fixedly mounted on the lower tool carrier (3) of the press, supporting a first unit (5, 25) whether a nut or a screw, mounted solely for free rotating of a reversible screw-nut system, and at least one rotatable threading-tap carrier (11 to 14) kinematically linked in rotation to the said first block (1) without slipping, a second block (2) fixedly mounted on the upper tool carrier (4) of the press, supporting the second unit (25, 5), maintained fixed both in rotation and axially, of the screw-nut system characterized

— in that the threading-tap carrier or carriers (11 to 14) are rotatably mounted parallel to one another in a single support (10) displacable (along direction 16, 17) parallel to the axes of the threading-tap carrier but fixed rotation, by reference to which support they are maintained in a fixed axial direction.

— and in that it is equipped with kinematic means (40 to 45, 33, 34, 26, 27 ; 40a to 45a, 33, 34a, 26a, 27a ; 40d, 44b, 44a, 45b, 34, 33 and 40c, 41c, 30k, 30f, 30g, 30h) enabling an axial displacement of the said single support (10) and a rotation of each threading-tap carrier (11 to 14) to be simultaneously produced in such a way that during each total descent of the slide of the press to the support (10) is axially displaced through a lesser distance corresponding exactly to the length necessary to perform the screw-cutting and in such a way that each threading tap carrier (11 to 14) performs one rotation whilst it is displaced axially by the amount of one thread pitch.

2. An automatic screw-cutting device according to Claim 1, characterized in that each threading-tap carrier (11 to 14) is maintained axially fixed relatively to the single support (10) by at least one elastic means (20) constantly urging upwards in direction (16) a portion (21) of the threading-tap carrier, and pressing against a portion (22) of the support (10), this elastic means (20) having sufficient force to oppose any backward movement of the threading-tap carrier from its point of application during the tapping of the corresponding hole.

3. A device according to Claim 1 or Claim 2, characterized in that the external circumference of the said single support (10) comprises a screw thread (26) that is in constant mesh with a screw thread (27) provided on the internal circumference (28) of a single rotatable hollow spindle (30) surrounding the support (10), each threading-tap carrier (11 to 14) being integral with a toothed pinion (33) concentric with its axis of rotation and in constant mesh with a toothed crown wheel (34) provided on the internal circumference (28) of the hollow spindle (30) which is itself kinematically linked in rotation with the first unit (5) of the screw-nut system by a transmission mechanism (40 to 45), the speed ratio supplied by the transmission mechanism and the pitch of the internal thread (27) of the hollow spindle (30) being so determined that during each total descent of the slide, the support (10) is axially displaced through a lesser distance corresponding exactly to the length necessary to perform the screw-cutting, the numbers of teeth on the toothed pinion (33) of each threading-tap carrier (11 to 14) and on the crown wheel (34) of the hollow spindle (30) respectively, and the pitch of the internal thread (27) of the hollow spindle (30) being determined in such a way that each threading-tap carrier (11 to 14) performs one rotation whilst it is displaced axially by the amount of one thread pitch.

4. A device according to Claim 3, characterized in that the hollow spindle (30m) comprises a base (30b) supporting a prolongation (30c) that is constantly pushed back in the direction of the piece to be tapped by an elastic device (30d), an abutment device (30e) or its equivalent, limiting the displacement of the hollow spindle (30m) in the direction of the piece to be tapped to a position that leaves a predetermined free spacing (d) between the top (1a) of the first block (1) of the press and the upper extremity of the hollow spindle (30m).

5. A device according to Claim 1 or Claim 2 characterized
— in that the said single support (10) comprises an axial cylindrical recess (70) parallel to the threading-tap carriers (11 to 14), its interior circumference being supplied with screw thread (27a),
— in that the said internal screw thread (27a) is constantly in mesh with a screw thread (26a) provided on the external circumference of a rotatable unit (30a) coaxial with the said cylindrical recess (70),
— in that each threading-tap carrier (11 to 14) is integral with a toothed pinion (33) concentric with its axis of rotation and constantly in mesh with a first set of teeth (34a) provided on the external circumference of the said rotatable unit (30a),
— and in that the said rotatable unit (30a) is provided with a second set of teeth (45a) enabling it to be kinematically linked in rotation with the first unit (5) of the screw-nut system by a transmission mechanism (40a, 41a, 41b, 42a), the speed ratio supplied by the transmission mechanism and the pitch of the external thread (26a) of the rotatable unit (30a) being so determined that during each total descent of the slide, the support (10) is axially displaced through a lesser distance corresponding exactly to the length necessary to perform the screw-cutting, the numbers of teeth on the toothed pinion (33) of each threading-tap carrier (11 to 14) and on the first set of teeth (34a) of the rotatable unit (30a) respectively, and the pitch of the external thread (26a) of the rotatable unit (30a) being determined in such a way that each threading-tap carrier (11 to 14) performs one rotation whilst it is displaced axially by the amount of one thread pitch.

6. A device according to Claim 5, characterized in that the lower part of the rotatable unit (30a) comprises a prologation (30c) that is constantly pushed back in the direction of the piece to be tapped by an elastic device (30d), an abutment device (30a), or its equivalent, limiting the displacement of the rotatable unit (30a) in the direction of the piece to be tapped to a position that leaves a predetermined free spacing (d) between the top (1a) of the first block (1) of the press and the upper extremity of the rotatable unit (30a).

7. A device according to Claim 1 or Claim 2, characterized
— in that the said single support (10) is displaceable axially by sliding and is connected to the mechanical device (30g, 30f, 30j, 10a, 30k) enabling an axial displacement to be imposed on it, the said mechanical device being governed by means (40c, 41c) connected to the displacement of the slide of the press in such a way that during each total descent of the slide, the support (10) is axially displaced through a lesser distance corresponding exactly to the lengh necessary to perform the screw-cutting,
— and in that each threading-tap carrier (11 to 14) is integral with a toothed pinion (33) concentric with its axis of rotation and enabling it to be kinematically linked in rotation with the first unit (5) of the screwnut system by a transmission mechanism (34, 45b, 44a, 44b, 40d), the speed ratio supplied by the said transmission mechanism and the numbers of teeth respectively being determined, in accordance with the mechanical control (30g, 30f, 30j, 10a, 30k, 40c, 41c) of axial displacement of the single support (10) in such a way that each threading-tap carrier (11 to 14) performs one revolution whilst it is axially displaced by the amount of one thread pitch.

**Patentansprüche**

1. Automatische Gewindeschneidvorrichtung an einer Schneid- oder Tiefziehpresse mit einem ersten Block (1), der an einem unteren Werkzeugträger (3) der Presse befestigt ist, der ein erstes Bauelement (5, 25) (Schraube oder Mutter) trägt, das sich lediglich drehen kann und das Teil eines umkehrbaren Mutter-Schrauben-Systems ist, sowie wenigstens einen drehbaren Träger (11-14) eines Gewindeschneiders trägt, der drehend und ohne zu gleiten kinematisch mit dem ersten Block (1) verbunden ist, ferner mit einem zweiten Block (2), der am oberen Werkzeugträger der Presse befestigt ist und der drehfest und axial unverschiebbar das andere Bauelement (25, 5) des Systems trägt, dadurch gekennzeichnet, daß der bzw. die Träger (11-14) drehbar und parallel zueinander in einer einzigen Stütze (10) gehalten sind, die parallel zu den Achsen der Träger (Pfeilrichtungen 16, 17) verschiebbar aber drehfest ist, wobei sie bezüglich der Stütze axial fixiert sind, und daß eine Kinematik (40-45, 33, 34, 26, 27 ; 40a-45a, 33, 34a, 26a, 27a ; 40d, 44b, 44a, 45b, 34, 33 und 40c, 41c, 30k, 30f, 30g, 30h) vorgesehen ist, die gleichzeitig eine Axialverschiebung der Stütze (10) sowie eine Drehung jedes der Träger (11-14) ermöglicht derart, daß bei jedem vollständigen Absenken des Gleitstücks der Presse die Stütze (10) um einen verringerten Abstand axial verschoben wird, der lediglich derjenigen Länge entspricht, die zum Gewindeschneiden notwendig ist, wobei jeder Träger (11-14) bei seiner Axialverschiebung um den Wert Schrittes sich einmal dreht.

2. Automatische Gewindeschneidvorrichtung nach Anspruch 1, dadurch gekennzeichnet, daß jeder der Träger (11-14) bezüglich der Stütze (10) über wenigstens ein elastisches Mittel (20) axial fixiert ist, daß ein Teil (21) des Trägers ständig nach vorne (Pfeil 16) vorspannt, und zwar abgestützt gegen ein Teil (22) der Stütze (10), wobei das elastische Mittel (20) eine Kraft ausübt, die größer ist als die beim Gewindeschneiden auftretende Gegenkraft.

3. Vorrichtung nach Anspruch 1 oder 2, dadurch gekennzeichnet, daß der Außenumfang der Stütze (10) ein Außengewinde (26) aufweist, das ständig mit einem Gewinde (27) kämmt, welches am Innenumfang einer einzigen, drehbaren Holspindel (30) vorgesehen ist, die die Stütze (10) umgibt, wobei jeder Träger (10-14) fest mit einem Zahnrad (33) verbunden ist, dessen Drehachse dazu konzentrisch ist, wobei das Zahnrad ständig mit einem Zahnkranz (34) kämmt, das am Innenumfang (28) der Hohlspindel (30) vorgesehen ist, die wiederum kinematisch drehend mit dem ersten Element (5) des Systems verbunden ist, und zwar über einen Übertragungsmechanismus (40-45), wobei ferner die vom Übertragungsmechanismus mitgeteilte Geschwindigkeit und die Steigung des Innengewindes (27) der Hohlspindel (30) derart festgelegt sind, daß bei jeder gesamten Abwärtsbewegung der Presse die Stütze (10) axial um einen verringerten Abstand verschoben wird, der lediglich derjenigen Länge entspricht, die notwendig ist, um das Gewinde zu schneiden, wobei die Zahnungen des Zahnrades (33), jedes Trägers (11-14) und des Zahnkranzes (34) der Hohlspindel (30) und die Steigung des Innengewindes (27) der Hohlspindel (30) so bestimmt sind, daß jeder Träger (11-14) eine Umdrehung durchführt, während er axial um den Wert eines Schritts verschoben wird.

4. Vorrichtung nach Anspruch 3, dadurch gekennzeichnet, daß die Hohlspindel (30m) einen Boden (30b) aufweist, der eine Verlängerung (30c) trägt, der ständig in Richtung des zu bearbeitenden Werkstücks vorgespannt wird, und zwar mittels eines elastischen Bauteils (30b), wobei ein Anschlag (30e) oder dergleichen die Verschiebung der Hohlspindel (30m) in Richtung des zu bearbeitenden Werkstücks bis zu einer Position begrenzt, die einen vorbestimmten freien Abstand (d) zwischen der Unterseite (1a) des ersten Blocks (1) der Presse und dem oberen Ende der Hohlspindel (30m) frei läßt.

5. Vorrichtung nach Anspruch 1 oder 2, dadurch gekennzeichnet, daß die Stütze (10) eine zylindrisch-axiale Aufnahme (50) aufweist, die sich parallel zu den Trägern (11-14) erstreckt und deren Innenumfang ein Gewinde (27a) aufweist, daß das Gewinde (27a) ständig mit einem Gewinde (26a) kämmt, welches am Außenumfang eines drehbaren Bauelements (30a) vorgesehen ist, das sich koaxial zur Zylindrischen Aufnahme (50) erstreckt, daß jeder Träger (11-14) fest mit einem Zahnrad (35) verbunden ist, das konzentrisch zu dessen Drehachse angeordnet ist und das ständig mit einer ersten Zahnung (34a) kämmt, die am Außenumfang des drehbaren Bauelements (30a) vorgesehen ist, und daß das drehbare Bauelement (30a) eine zweite Zahnung (45a) aufweist, die eine kinematische Drehverbindung mit dem ersten Element (5) des Systems ermöglicht, und zwar über einen Übertragungsmechanismus (40a, 41a, 41b, 42a), wobei die vom Übertragungsmechanismus mitgeteilte Geschwindigkeit und die Steigung des Außengewindes (26a) des drehbaren Elements (30a) derart festgelegt sind, daß bei jeder vollständigen Absenkung der Presse die Stütze axial um eine verringerte Distanz verschoben wird, die lediglich derjenigen Länge entspricht, die notwendig ist, um das Gewinde zu schneiden, wobei die Anzahl der Zähne des Zahnrades (33), jedes Trägers (11-14) und der ersten Zahnung (34a) des drehbaren Elements (30) und die Steigung des Außengewindes (26a) des drehbaren Elements (30a) derart bestimmt sind, daß jeder Träger (11-14) eine Umdrehung vollführt, während er axial um den Wert eines Schritts verschoben wird.

6. Vorrichtung nach Anspruch 5, dadurch gekennzeichnet, daß der untere Teil des drehbaren Elements (30a) eine Verlängerung (30c) aufweist, die ständig in Richtung des zu bearbeitenden Werkstücks vorgespannt wird, und zwar über ein elastisches Bauelement (30d), wobei ein Anschlag (30e) oder dergleichen die Verschiebung des drehbaren Bauelements (30a) in Richtung auf das zu bearbeitende Werkstück bis zu einer Position begrenzt, die einen vorbestimmten freien Abstand (d) zwischen der Oberseite (1a) des ersten Blocks (1) der Presse und dem oberen Ende des drehbaren Bauelements (30a) frei läßt.

7. Vorrichtung nach Anspruch 1 oder 2, dadurch gekennzeichnet, daß die Stütze (10) axial gleitend verschoben wird und mit einer mechanischen Einrichtung (30g, 30f, 30j, 10a, 30k) verbunden ist, die ihr eine Axialverschiebung mitteilt und die von einer Steuerung (40c, 41c) gesteuert wird, die mit der Verschiebung der Presse derart verbunden ist, daß bei jeder vollständigen Abwärtsbewegung der Presse die Stütze (10) axial um einen verringerten Abstand verschoben wird, der lediglich der zum Gewindeschneiden notwendigen Länge entspricht, daß jeder Träger (11-14) mit einem Zahnrad (33) fest verbunden ist, das konzentrisch zu dessen Achse angeordnet ist und das den Träger kinematisch und drehend mit einem ersten Element (5) des Systems verbindet, und zwar über einen Übertragungsmechanismus (34, 45b, 44a, 44b, 40d), wobei die vom Übergungsmechanismus mitgeteilte Geschwindigkeit und die Anzahl der Zähne in Abhängigkeit von der mechanischen Steuerung (30g, 30f, 30j, 10a, 30k, 40c, 41c) für die Axialverschiebung der Stütze (10) derart bestimmt sind, daß jeder Träger (11-14) eine Umdrehung vollführt, während er axial um den Wert eines Schrittes verschoben wird.

# FIG.1

50 mm

4.mm

2mm

1/36 sec.

1 sec.

# FIG. 2

5mm

4 mm

2mm

1/8 sec

1 sec.

1

FIG.3

0 192 586

# FIG.4

# FIG.6

FIG.5

FIG.8

0 192 586

FIG.9

FIG.7

6

FIG. 10

0 192 586